# DEMANDE DE BREVET EUROPEEN

(11) **EP 1 449 748 A1**
(43) Date de publication de la demande: **25.08.2004**
(21) Numéro de dépôt: 04290434.2
(22) Date de dépôt: 18.02.2004
(51) Int. Cl.: B62D 25/08

(54) **Face avant technique de véhicule automobile, comportant une traverse supérieure renforcée**

(30) Priorité: 18.02.2003 FR 0301957
(71) Demandeur: COMPAGNIE PLASTIC OMNIUM, 69007 Lyon (FR)
(72) Inventeur: Andre, Gérald, 01500 Amberieu en Bugey (FR); Cheron, Hugues, 01800 Meximieux (FR)
(74) Mandataire: de la Bigne, Guillaume Michel Marie

(57) **Abrégé**

L'invention concerne une face avant technique de véhicule automobile, comportant une traverse supérieure (2) prolongée à ses extrémités (3), d'une part par des supports latéraux (4), d'autre part par des jambages (6).

Cette face avant (1) comporte au moins une première et une deuxième pièces structurelles (8, 9) comportant chacune une partie centrale (10, 11) et deux prolongements (12, 13) de part et d'autre de ladite partie centrale (10, 11), les parties centrales (10, 11) des deux pièces structurelles (8, 9) appartenant à la traverse (2), les prolongements (12, 13) de la première pièce structurelle (8) appartenant aux supports latéraux (4) tandis que les prolongements (12, 13) de la deuxième pièce structurelle (9) appartiennent aux jambages (6). La traverse supérieure (2) comporte un corps (15) réalisé dans une matière plastique, reliant les pièces structurelles (8,9).

## Description

La présente invention concerne un module technique rigidifié pour un véhicule automobile. Un tel module est plus couramment désigné comme une « face avant technique» de véhicule automobile.

Une face avant technique comporte habituellement une traverse supérieure pour l'interface avec un capot qui vient s'accrocher à elle au moyen d'une serrure au moins, logée dans la traverse.

La traverse supérieure a plusieurs fonctions :
- premièrement, elle doit empêcher une ouverture non souhaitée du capot, qu'il s'agisse d'une ouverture forcée relevant du vandalisme ou d'une ouverture intempestive sous l'effet de la portance subie par le capot lors du roulage ou à la suite d'un choc frontal ;
- deuxièmement, elle doit permettre le claquage du capot, c'est-à-dire la fermeture de celui-ci après une chute de plusieurs dizaines de centimètres ;
- troisièmement, elle participe à la rigidité de la caisse du véhicule, car elle établit une liaison transversale entre les ailes de celui-ci ;
- quatrièmement, elle doit pouvoir, dans certains cas, supporter des organes fonctionnels du véhicule, tel qu'un radiateur.

Afin de remplir ces fonctions, la traverse doit être suffisamment rigide. Elle doit présenter notamment une bonne résistance à la flexion, de même que (dans une moindre mesure toutefois) une bonne résistance à la torsion.

Une telle traverse est prolongée à ses extrémités :
- d'une part, par des supports latéraux, sur lesquels viennent généralement se fixer divers organes fonctionnels du véhicule, tels que ses projecteurs, et par lesquels la traverse se raccorde à une doublure d'aile ou à un longeron supérieur ;
- d'autre part, par des jambages, qui relient la traverse supérieure à des platines inférieures pour la fixation de la face avant à des longerons, et sur lesquels vient généralement se fixer une poutre de chocs.

Les platines forment les points d'ancrage principaux de la face avant technique, les extrémités des supports latéraux formant des points d'ancrage secondaires. Il est donc préférable que les jambages et les supports latéraux présentent également une bonne rigidité, et notamment une bonne résistance à la flexion.

On connaît des faces avant techniques réalisées essentiellement en métal.

Si ces faces avant résistent plutôt bien aux contraintes de flexion résultant d'une traction exercée sur le capot pour forcer son ouverture, leur fabrication est toutefois compliquée, car elle implique de nombreuses opérations, notamment de découpe, d'emboutissage, de soudage, qui sont complexes et requièrent un outillage important et coûteux. En outre, de telles faces avant sont relativement lourdes. Or les constructeurs automobiles cherchent au contraire à alléger les parties structurelles des véhicules.

Il existe d'autres types de faces avant techniques, réalisées essentiellement en matière plastique.

De telles faces avant sont de fabrication plus commode, l'injection des matières plastiques étant par nature plus flexible que la mise en forme des métaux.

Toutefois, les matières plastiques les plus performantes (en l'occurrence, en termes de résistance à la flexion) sont également les plus chères.

De plus, à résistance égale, une pièce réalisée en matière plastique est généralement plus volumineuse qu'une pièce métallique.

Or, si les constructeurs sont en quête de légèreté comme indiqué ci-dessus, ils sont également en quête de compacité.

L'invention vise à résoudre notamment les inconvénients précités des faces avant techniques connues, en proposant une face avant technique qui soit à la fois compacte et légère, qui présente aux tractions exercées sur le capot une résistance au moins égale à celles des faces avant connues, et dont la fabrication soit à la fois commode et économique.

A cet effet, l'invention propose une face avant technique de véhicule automobile comportant une traverse supérieure prolongée à ses extrémités, d'une part par des supports latéraux, d'autre part par des jambages, cette face avant étant **caractérisée** en ce qu'elle comporte au moins une première et une deuxième pièces structurelles comportant chacune une partie centrale et deux prolongements de part et d'autre de ladite partie centrale, les parties centrales des deux pièces structurelles appartenant à la traverse, les prolongements de la première pièce structurelle appartenant aux supports latéraux tandis que les prolongements de la deuxième pièce structurelle appartiennent aux jambages, et en ce que la traverse supérieure comporte un corps réalisé dans une matière plastique, reliant les pièces structurelles.

L'association des pièces structurelles au niveau de leurs parties centrales confère à la traverse de bonnes qualités de résistance à la fois à la flexion et à la torsion, également favorisées par la disposition des prolongements des pièces structurelles.

Les pièces structurelles sont de préférence des pièces métalliques.

Suivant un mode de réalisation, le corps de traverse comporte des moyens de rigidification propres à maintenir constante la section transversale des pièces structurelles.

Il en résulte une meilleure tenue de la face avant à la flexion, mais également à la torsion.

Ces moyens de rigidification comportent par exemple un réseau de nervures transversales qui s'étend dans l'espace délimité par chaque pièce structurelle.

En outre, les pièces structurelles sont par exemple emboîtées sur le corps de traverse.

En variante, les pièces structurelles sont, au moins partiellement, noyées dans le corps de traverse.

La deuxième pièce structurelle présente avantageusement un profil général en forme de U inversé, de sorte à contribuer à la rigidification des jambages de la face avant technique.

Suivant un mode de réalisation, les pièces structurelles présentent chacune, en section, une forme en C ; elles peuvent être orientées de manière que les concavités de leurs parties centrales respectives soient tournées l'une vers l'autre, ce qui présente des avantages en termes de résistance à la torsion, ou au contraire à l'opposé l'une de l'autre.

Dans cette configuration, l'une des pièces structurelles est par exemple munie d'un doigt en saillie, propre à venir se loger dans une cavité en regard, ménagée dans l'autre pièce structurelle.

L'une des pièces structurelles est par exemple située vers l'avant de la traverse, tandis que l'autre est située vers l'arrière de celle-ci.

Suivant un autre mode de réalisation, les pièces structurelles se présentent sous la forme de plaques métalliques positionnées, en section, aux limites extrêmes inférieure et supérieure du corps de traverse, lui-même réalisé en thermoplastique et intercalé entre elles.

Les pièces structurelles et le corps de traverse, superposés verticalement, forment ainsi ensemble un sandwich tôle/plastique/tôle, des essais ayant montré que cette combinaison est optimale du point de vue de la rigidité en flexion de la traverse supérieure.

L'une des pièces structurelles présente par exemple un profil global fermé.

L'invention sera mieux comprise à la lecture de la description qui va suivre, donnée uniquement à titre d'exemple et faite en se référant aux dessins dans lesquels :
- la figure 1 est une vue en perspective éclatée, depuis l'avant, d'une face avant technique suivant un premier mode de réalisation, où les pièces structurelles ont leurs concavités tournées l'une vers l'autre ;
- la figure 2 est une vue en perspective de la face avant technique de la figure 1, après assemblage ;
- la figure 3 est une vue de détail en perspective illustrant deux pièces structurelles dont les concavités sont tournées à l'opposé l'une de l'autre, dans une position d'utilisation normale où ces pièces sont écartées l'une de l'autre ;
- la figure 4 est une vue analogue à la figure 3, qui illustre une configuration dans laquelle les pièces structurelles sont proches l'une de l'autre, par exemple à la suite d'un choc frontal ;
- la figure 5 est une vue d'élévation longitudinale en coupe illustrant une face avant dont l'une des pièces structurelles est reliée à un longeron du véhicule, le parallélisme étant respecté entre les deux pièces structurelles ;
- la figure 6 est une vue analogue à la figure 5, qui illustre un défaut de parallélisme entre les pièces structurelles ;
- la figure 7 est une vue partielle en perspective, depuis l'arrière, d'une face avant technique suivant un troisième mode de réalisation.

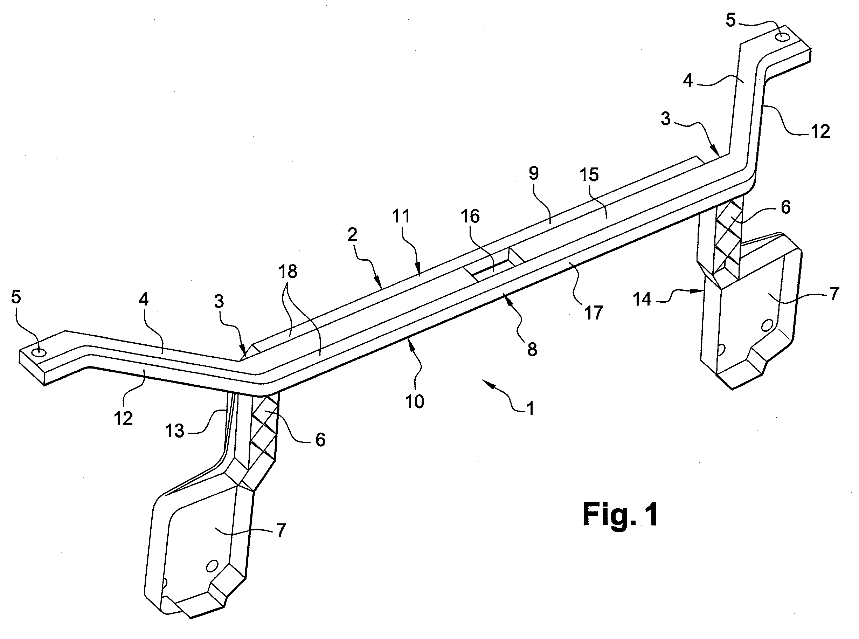

Sur la figure 1 est représentée une face avant technique 1 de véhicule automobile qui, pour l'accrochage du capot (non représenté) de celui-ci, comporte une traverse supérieure 2 qui s'étend transversalement par rapport à la direction générale de déplacement du véhicule.

La traverse 2 est prolongée de part et d'autre, à ses extrémités 3, par des supports latéraux 4 qui viennent chacun se fixer à une doublure d'aile ou, dans certains types de véhicules automobiles, à un longeron supérieur sur lequel est en général montée l'aile du véhicule.

A cet effet, et tel qu'il apparaît sur la figure 1, chaque support latéral 4 est percé à son extrémité d'un trou 5 pour le passage d'une vis de fixation à la doublure d'aile ou au longeron, ou d'un pion de positionnement par rapport à la doublure d'aile ou au longeron.

Comme cela est visible sur les figures, la traverse supérieure 2 est globalement droite, les supports latéraux 4 ne s'étendant pas tout à fait dans son prolongement.

En l'occurrence, les supports latéraux 4 sont déportées vers l'arrière et/ou vers le haut par rapport à la traverse 2, cette forme dépendant avant tout de la conformation des pièces structurelles environnantes (moteur, doublures d'ailes, longerons, etc.), mais également de la forme des organes fonctionnels, en particulier des projecteurs lumineux (non représentés), qui sont montés sur les supports latéraux 4.

La traverse 2 est également prolongée de part et d'autre, à ses extrémités 3, par des jambages 6 sensiblement verticaux qui la relient à des platines 7 qui viennent se fixer aux extrémités avant de longerons (non représentés).

Bien que cela ne soit pas non plus représenté, précisons qu'une poutre de chocs est destinée à être montée sur les platines 7, par l'intermédiaire d'absorbeurs locaux d'énergie (non représentés) montés sur celles-ci, et sur lesquels est à son tour fixée la poutre de chocs.

La face avant 2 comporte au moins deux pièces structurelles 8, 9, à savoir une première pièce structurelle 8 et une deuxième pièce structurelle 9, comportant chacune une partie centrale 10, 11 et deux prolongements 12, 13 de part et d'autre de cette partie centrale 10, 11.

La première pièce structurelle 8, située vers l'avant de la traverse 2, est dénommée pièce avant, tandis que la deuxième 9, située au contraire vers l'arrière de la traverse 2, est dénommée pièce arrière.

D'une part, les parties centrales 10, 11 des deux pièces structurelles 8 et 9 appartiennent à la traverse 2. D'autre part, les prolongements 12 de l'une des pièces structurelles (en l'occurrence, la pièce avant 8) appartiennent aux supports latéraux 4, tandis que les prolongements 13 de l'autre pièce structurelle (en l'occurrence, la pièce arrière 9) appartiennent aux jambages 6.

Ainsi, les parties centrales 10, 11 des pièces structurelles 8, 9 s'étendent sensiblement horizontalement, tandis que les prolongements 12 de la pièce structurelle avant 8 s'étendent suivant une direction inclinée vers l'arrière et/ou vers le haut, et que les prolongements 13 de la pièce structurelle arrière 9 s'étendent verticalement.

Comme cela est visible sur la figure 1, la face avant technique 2 comporte en fait une carcasse 14 réalisée par moulage d'une matière plastique (de préférence un thermoplastique, tel qu'un polypropylène), qui forme, pour partie au moins, la traverse supérieure 2, les supports latéraux 4 et les jambages 6.

Plus particulièrement, la traverse 2 comporte un corps 15 qui relie les pièces structurelles 8, 9, celles-ci venant renforcer la traverse 2, au moins en ce qui concerne sa résistance à la flexion, des contraintes de flexion apparaissant notamment lorsqu'on exerce une traction sur le capot, qui est accroché à la traverse 2, par exemple par l'intermédiaire d'une serrure (non représentée) placée dans un logement 16 ménagé dans le corps de traverse 15.

Dans ce qui suit, les pièces structurelles 8, 9 sont, pour de simples raisons de commodités, dénommées « renforts ».

Ces renforts 8, 9 sont en l'occurrence des profilés métalliques comportant chacun une âme 17 qui, lorsque le renfort 8, 9 est monté sur la carcasse 14, s'étend dans un plan vertical, prolongée par deux flancs 18, 19 formés par des retours en équerre qui, dans la partie centrale 10, 11 du renfort 8, 9, s'étendent parallèlement dans un plan horizontal.

Les renforts 8, 9 présentent ainsi en section transversale (c'est-à-dire, pour ce qui concerne leurs parties centrales 10, 11, dans un plan perpendiculaire au corps de traverse 15) une forme en C (la largeur de l'âme 17 étant supérieure ou égale à celle des flancs 18, 19).

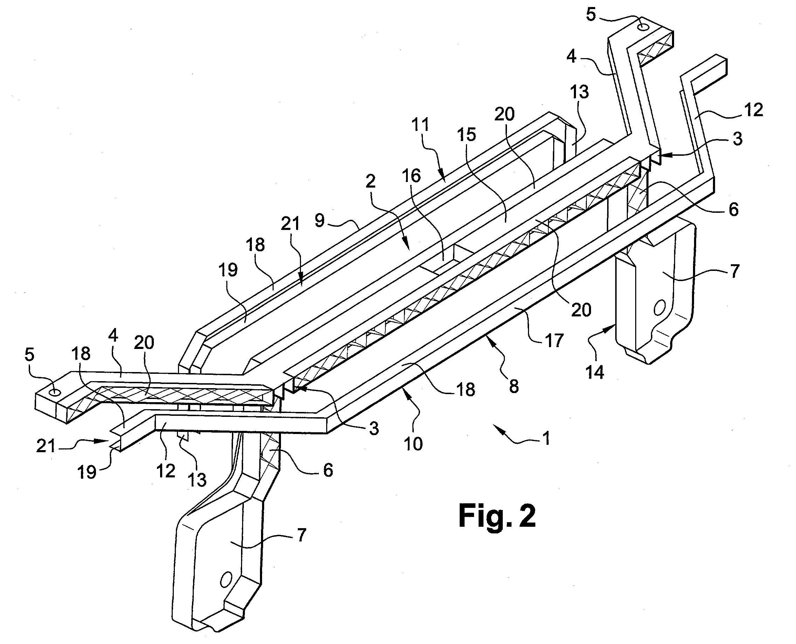

Suivant un premier mode de réalisation illustré sur les figures 1 et 2, les renforts 8, 9 sont rapportés sur la carcasse 14 en étant emboîtés sur celle-ci de manière que les concavités des renforts 8, 9 soient, dans leurs parties centrales 10, 11 respectives, tournées l'une vers l'autre.

Pour être plus précis :
- les parties centrales 10, 11 des renforts 8, 9 sont emboîtées sur le corps de traverse 15 ;
- les prolongements 12 du renfort avant 8 sont emboîtés sur les supports latéraux 4 ; et
- les prolongements 13 du renfort arrière 9 sont emboîtés sur les jambages 6.

Une fois ce montage - particulièrement simple et rapide - réalisé, le renfort avant 8 présente un profil global en forme de C à concavité tournée vers l'arrière et/ou vers le haut, tandis que le renfort arrière 9 présente quant à lui un profil global en forme de C à concavité tournée vers le bas.

On comprend que la rigidité de la traverse 2, c'est-à-dire, comme nous l'avons vu, sa résistance à la flexion, réside pour l'essentiel dans la présence des renforts 8, 9.

Sous l'effet d'une traction exercée sur le capot, la traverse 2 est soumise à une contrainte de flexion dirigée verticalement et orientée vers le haut. Autrement dit, cette contrainte est normale aux flancs 18, 19 des renforts 8, 9, dans leurs parties centrales 10, 11.

Sous l'effet de cette contrainte, les renforts 8, 9 auront tendance à fléchir en se courbant vers le haut. Leur résistance à cette déformation globale sera d'autant plus grande s'ils peuvent résister à des déformations locales.

C'est pourquoi on veillera à maintenir sensiblement constante l'inertie (c'est-à-dire, en pratique, la forme) des renforts 8, 9.

A cet effet, la traverse 2 comporte ici des moyens de rigidification pour maintenir constante, ou sensiblement constante, la section transversale des renforts 8, 9.

Ces moyens de rigidification comportent en l'occurrence un réseau de nervures 20 transversales formées sur le corps de traverse 15, qui s'étend le long celui-ci.

Comme cela est visible sur les figures, le réseau de nervures 20 est de forme complémentaire des renforts 8, 9, de sorte que, lorsque ceux-ci sont emboîtés sur la traverse 2, le réseau 20 s'étend dans l'espace 21 délimité par l'âme 17 et les flancs 18, 19 de chaque renfort 8, 9.

Le réseau de nervures 20 permet de maintenir constant l'écart entre les flancs 18, 19 d'un même renfort 8, 9, de sorte que celui-ci est peu sensible aux déformations locales. Il en résulte que l'inertie des renforts 8, 9 et, par conséquent, de la traverse supérieure 2, est maintenue sensiblement constante, ce qui accroît sa rigidité et sa résistance à la flexion.

Comme cela est visible sur la figure 1, le réseau de nervures 20 se prolonge sur les supports latéraux 4, de même que sur les jambages 6. L'inertie des renforts 8, 9 y est donc également conservée, au bénéfice de la rigidité de la face avant technique 1 au niveau des supports latéraux 4 et des jambages 6.

Comme les supports latéraux 4 et les jambages 6 sont des pièces de liaison de la traverse 2 au châssis du véhicule, comme nous l'avons vu ci-dessus, cette rigidité accrue des supports latéraux 4 et des jambages 6 accroît encore la résistance de la traverse 2 à la flexion et, plus généralement, accroît la rigidité globale de la face avant 1.

Selon le mode de réalisation qui vient d'être décrit, les renforts 8, 9 sont rapportés sur le corps de traverse 15.

Les renforts 8, 9 peuvent, en variante, être au moins partiellement noyés dans le corps de traverse 15. De même, leurs prolongements 12, 13 peuvent être au moins partiellement noyés, respectivement, dans les supports latéraux 4, et dans les jambages 6. Cette disposition peut être obtenue de manière relativement simple par surmoulage.

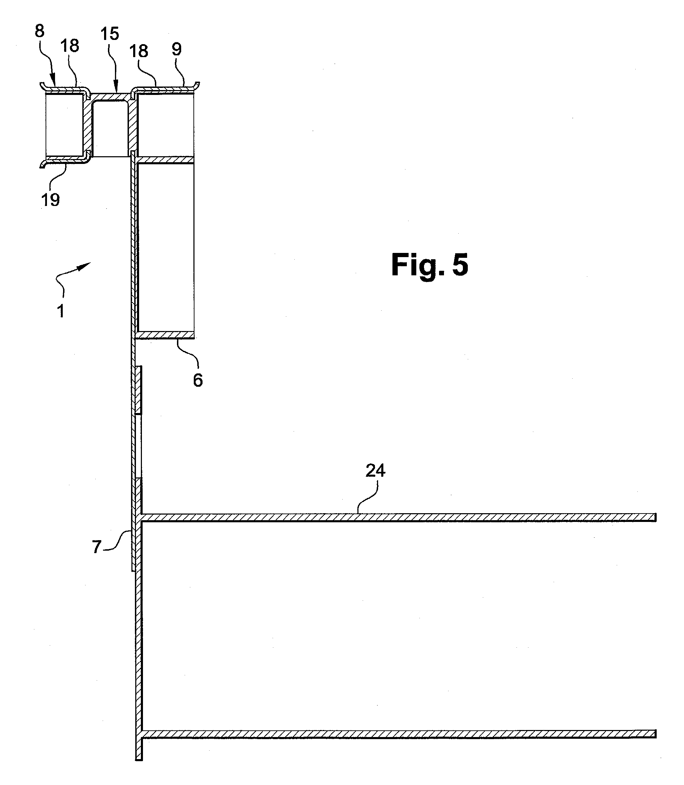

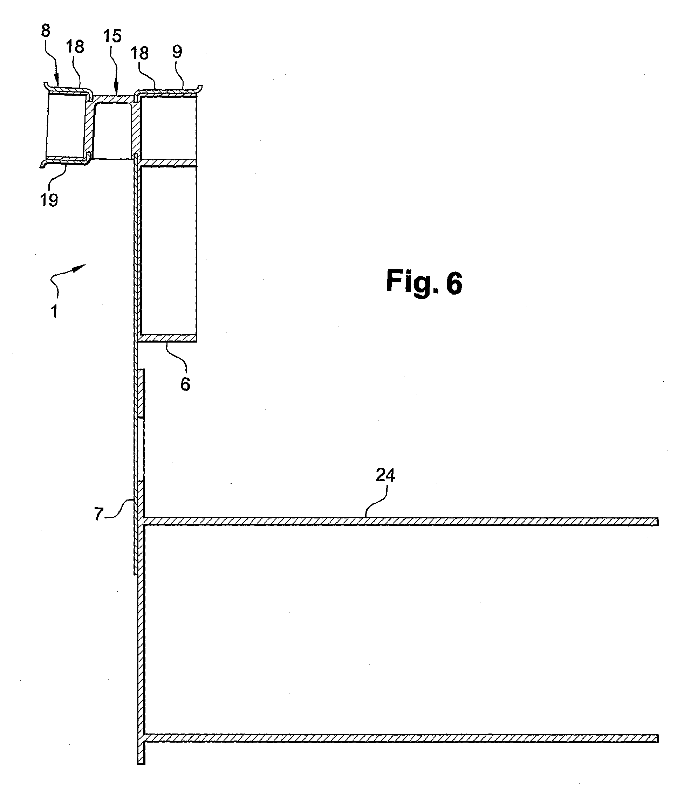

Il est notamment possible, dans ce cas, au lieu de disposer les renforts 8, 9 de manière que leurs concavités soient, dans leurs parties centrales 10, 11, tournées l'une vers l'autre, de les disposer de manière que leurs concavités soient, dans leurs parties centrales 10, 11, tournées à l'opposé l'une de l'autre, comme cela est représenté sur les figures 5 et 6.

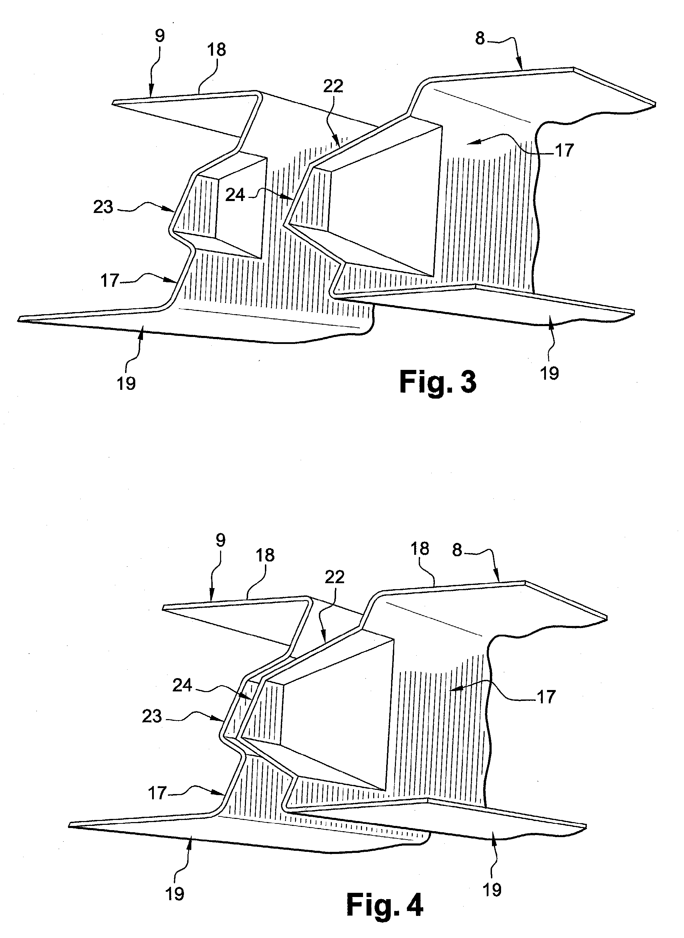

On décrit à présent un second mode de réalisation, en référence aux figures 3 et 4.

Suivant ce mode de réalisation, les renforts sont, précisément, disposés de manière que leurs concavités soient, dans leurs parties centrales 10, 11, tournées à l'opposé l'une de l'autre.

Les éléments communs au premier mode de réalisation décrit ci-dessus ne seront pas décrits à nouveau. Par contre, ces éléments sont portés sur les figures avec les mêmes références numériques.

Sur les figures 5 et 6, seuls les renforts 8, 9 sont représentés, à des fins de clarté.

Comme cela est visible sur chacune de ces figures, le renfort avant 8 présente, dans sa partie centrale 10, un doigt 22 saillant de son âme 17 vers l'arrière, c'est-à-dire à l'opposé de sa concavité. Ce doigt 22 peut aisément être obtenu par emboutissage.

Le renfort arrière 9 présente quant à lui, dans sa partie centrale 10, en face du doigt 22, une cavité 23 creusée vers la concavité du renfort 9. Cette cavité 23 forme un logement pour l'extrémité 24 du doigt 22, dont elle est complémentaire en forme.

Au montage, les renforts 8, 9 sont positionnés sur le corps de traverse 15 en étant suffisamment espacées l'une de l'autre pour que le doigt 22 se trouve à distance de la cavité 23, comme cela est représenté sur la figure 3.

Dans cette configuration, les renforts 8, 9 ne sont pas en contact l'un avec l'autre, les contraintes de flexion ou de torsion qu'ils subissent étant communiqués au corps de traverse 15 qui joue un rôle d'amortisseur.

En cas de choc frontal impliquant le renfort avant 8, celui-ci recule en écrasant le corps de traverse 15 jusqu'à venir buter contre le renfort arrière 9, le doigt 22 venant se loger dans la cavité 23.

Le choc se transmet alors au renfort arrière 9, qui oppose à l'effort subi sa propre résistance à la flexion (et/ou, suivant les cas, à la torsion). Cette résistance s'ajoute et se combine à la résistance opposée par le renfort avant 8, de sorte à accroître la rigidité globale de la face avant 1, tant en flexion qu'en torsion.

Malgré sa rigidité lors d'une situation critique où elle se trouve sous contrainte (par exemple lors d'un choc frontal ou latéral, ou lorsqu'une roue avant vient heurter un obstacle), la face avant 1 présente au repos une certaine souplesse (c'est-à-dire en dehors des situations critiques), permise par la relative indépendance des renforts 8, 9.

Cette souplesse est illustrée sur les figures 5 et 6, lesquelles, bien que réalisées conformément au second mode de réalisation décrit ci-dessus, dans lequel les renforts sont tournés dos-à-dos, peuvent s'appliquer au premier mode de réalisation décrit plus haut.

Comme cela est visible sur la figure 5, les platines 7 sont fixées au longeron 24 d'un véhicule. Le renfort arrière 9 est donc relié de manière rigide au longeron 24.

Le renfort avant 8 est, quant à lui, comme cela est expliqué plus haut, et bien que cela n'apparaisse pas sur cette figure, relié de manière rigide aux ailes du véhicule, soit par l'intermédiaire d'un longeron supérieur (non représenté), soit par l'intermédiaire d'une doublure d'aile.

La fixation des renforts 8, 9 leur impose leur positionnement. Lorsque les doublures d'ailes (ou, suivant les cas, les longerons supérieurs) et les longerons 24 sont positionnés correctement l'un par rapport à l'autre, les renforts 8, 9 se placent automatiquement dans l'alignement l'un de l'autre, comme cela est représenté sur la figure 5.

Toutefois, lorsque le longeron 24 présente un défaut d'alignement par rapport à l'aile du véhicule, comme cela est représenté sur la figure 6 (et comme cela est permis dans les tolérances de montage des véhicules), la souplesse de la face avant 1 permet son montage sans qu'il soit nécessaire de déformer au moins le renfort avant 8.

Cela permet de conserver de bonnes références géométriques, au moins au niveau du renfort avant 8.

Il est à noter que, sur la figure 6, le défaut de parallélisme est exagéré afin d'illustrer la relative souplesse de la face avant 1.

Dans la réalisation illustrée sur les figures 5 et 6, les renforts 8, 9 sont intégrés au corps de traverse 15 par surmoulage.

Dans ce cas, il est préférable de noyer au moins en partie les flancs 18, 19 dans le corps de traverse 15, afin de répartir, en cas de déformation subie par la face avant, l'effort transmis par le corps de traverse 15 aux renforts 8, 9.

En effet, comme nous l'avons vu ci-dessus, le corps de traverse présente un réseau de nervures qui, si elles s'appliquaient directement sur les flancs 18, 19, provoqueraient une localisation de la contrainte dommageable pour les propriétés mécaniques des renforts 8, 9.

Il résulte de ce surmoulage particulier une minimisation des risques de localisation des contraintes en cas de déformation et, par conséquent, une stabilisation mécanique de la face avant 1.

Par ailleurs, bien que les flancs 18, 19 soient ici prévus parallèles, il est possible d'ouvrir le profil des renforts 8, 9 de sorte que les flancs 18, 19 s'écartent (au moins légèrement) l'un de l'autre, de sorte à augmenter l'inertie des renforts 8, 9.

Dans le cas du premier mode de réalisation (figures 1 et 2), cette forme permet au renfort avant 8 de mieux épouser la cambrure du capot moteur, ce qui facilite la fermeture de celui-ci et réduit les jeux de montage.

Les renforts 8, 9 présentés ci-dessus ont, comme nous l'avons vu, un profil global en forme de C, comme cela est illustré sur les figures 1 et 2. Ce profil est imposé, d'une part, par des exigences de rigidité (en flexion, en torsion), ainsi que, plus généralement, par la forme globale de la face avant 1, forme qui dépend du véhicule auquel est destinée la face avant 1.

Comme nous l'avons vu, le renfort avant 8 est ici prévu pour rejoindre les ailes du véhicule en étant associé aux projecteurs. Le fait que la traverse 2 se trouve à l'aplomb de l'extrémité avant du capot (pour en permettre l'accrochage) et que les projecteurs s'étendent en arrière de cette extrémité avant impose la forme en C du renfort avant 8.

Par contre, la forme du renfort arrière 9 peut être modifiée afin de remplir une ou plusieurs fonctions supplémentaires.

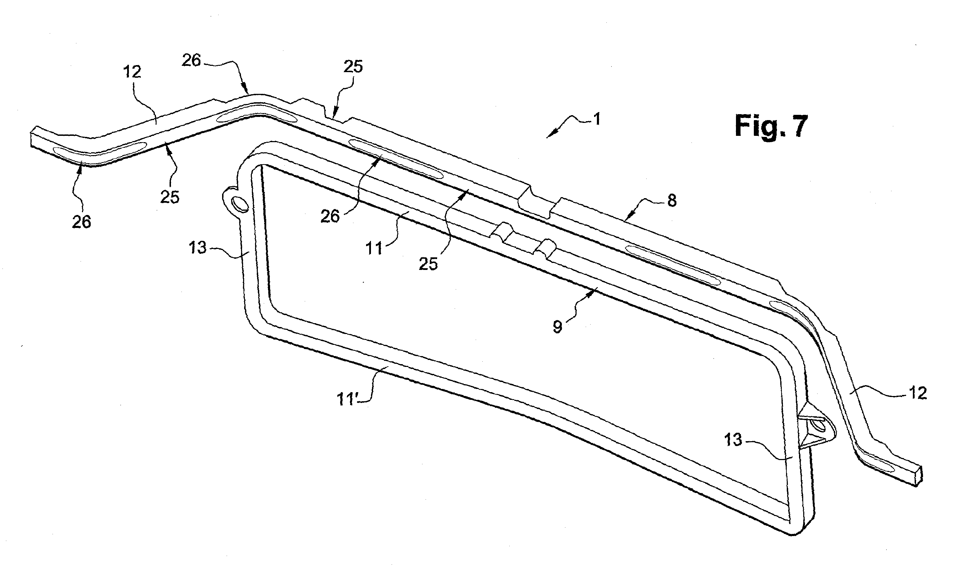

Ainsi, suivant un troisième mode de réalisation illustré sur la figure 7, le renfort arrière 9 présente un profil global fermé : il présente en effet une partie centrale inférieure 11' qui relie les extrémités inférieures de ses prolongements 13.

De la sorte, il est possible d'intégrer un radiateur (non représenté) au sein du renfort arrière 9, qui délimite un logement approprié et forme pour le radiateur un cadre protecteur.

En outre, cette forme fermée accroît encore la rigidité (en flexion, en torsion) du renfort arrière 9, dont la partie centrale inférieure 11' est par exemple emboîtée sur une poutre (non représentée) reliant les platines 7 de la face avant technique 1.

Suivant d'autres variantes de réalisation (non représentées), les renforts 8, 9 présentent en section une forme autre qu'un C. Ainsi, cette section peut présenter une forme de I, ou de U (la largeur de l'âme 17 étant alors inférieure ou égale à celle des flancs 18, 19).

Suivant encore un autre mode de réalisation, les renforts présentent en section, dans leur partie centrale, une forme plate et sont positionnés de part et d'autre du corps de traverse, à ses extrémités supérieure et inférieure.

De la sorte, les renforts et le corps de traverse forment ensemble un sandwich métal/plastique/métal qui présente une bonne résistance à la flexion.

En section, le profil des renforts 8, 9 peut également être fermé (par exemple carré, rectangulaire, trapézoïdal ou, plus généralement, en forme de parallélogramme), de sorte à accroître leur inertie et, par conséquent leur rigidité (en flexion et en torsion).

Il en résulte une meilleure stabilité encore de la face avant 1.

Par ailleurs, un même renfort 8, 9 peut présenter, en des zones différentes, des profils différents en section, afin de combiner leurs avantages respectifs (rigidité, facilité de réalisation et/ou de montage, etc.).

Ainsi, suivant le troisième mode de réalisation illustré sur la figure 7, le renfort avant 8 présente-t-il une alternance de zones 25 où sa section est à profil fermé, avec des zones 26 où sa section est à profil ouvert, en l'occurrence en C.

## Revendications

1. Face avant technique de véhicule automobile, comportant une traverse supérieure (2) prolongée à ses extrémités (3), d'une part par des supports latéraux (4), d'autre part par des jambages (6), cette face avant (1) étant **caractérisée en ce qu'**elle comporte au moins une première et une deuxième pièces structurelles (8, 9) comportant chacune une partie centrale (10, 11) et deux prolongements (12, 13) de part et d'autre de ladite partie centrale (10, 11), les parties centrales (10, 11) des deux pièces structurelles (8, 9) appartenant à la traverse (2), les prolongements (12, 13) de la première pièce structurelle (8) appartenant aux supports latéraux (4) tandis que les prolongements (12, 13) de la deuxième pièce structurelle (9) appartiennent aux jambages (6), et **en ce que** la traverse supérieure (2) comporte un corps (15) réalisé dans une matière plastique, reliant les pièces structurelles (8,9).

2. Face avant technique selon la revendication 1, dans laquelle les pièces structurelles (8, 9) sont des pièces métalliques.

3. Face avant technique selon la revendication 1 ou 2, dans laquelle le corps de traverse (15) comporte des moyens de rigidification propres à maintenir constante la section transversale des pièces structurelles (8, 9).

4. Face avant technique selon la revendication 3, dans laquelle lesdits moyens de rigidification comportent un réseau (20) de nervures transversales, qui s'étend dans l'espace délimité par chaque pièce structurelle (8, 9).

5. Face avant technique selon l'une des revendications 1 à 4, dans laquelle les pièces structurelles (8, 9) sont emboîtées sur le corps de traverse (15).

6. Face avant technique selon l'une des revendications 1 à 4, dans laquelle les pièces structurelles (8, 9) sont, au moins partiellement, noyées dans le corps de traverse (15).

7. Face avant technique selon l'une des revendications 1 à 6, dans laquelle les pièces structurelles sont positionnées de part et d'autre du corps de traverse aux extrémités inférieure et supérieure de celui-ci et présentent en section une forme plate, de sorte que les pièces structurelles et le corps de traverse forment ensemble un sandwich.

8. Face avant technique selon l'une des revendications 1 à 6, dans laquelle les pièces structurelles (8, 9) présentent chacune, en section, une forme en C.

9. Face avant technique selon la revendication 8, dans laquelle les pièces structurelles (8, 9) sont orientées de manière que les concavités de leurs parties centrales (10, 11) respectives soient tournées l'une vers l'autre.

10. Face avant technique selon la revendication 8, dans laquelle les pièces structurelles (8, 9) sont orientées de manière que les concavités de leurs parties centrales (10, 11) respectives soient tournées à l'opposé l'une de l'autre.

11. Face avant technique selon la revendication 10, **caractérisée en ce que**, l'une des pièces structurelles (8) est munie d'un doigt (22) en saillie, propre à venir se loger dans une cavité (23) en regard, ménagée dans l'autre pièce structurelle (9).

12. Face avant technique selon l'une des revendications 1 à 11, dans laquelle l'une (8) des pièces structurelles est située vers l'avant de la traverse (2), tandis que l'autre (9) est située vers l'arrière de celle-ci.

13. Face avant technique selon l'une des revendications 1 à 12, dans laquelle l'une (9) des pièces structurelles présente un profil global fermé.
